# EUROPÄISCHE PATENTSCHRIFT

(11) **EP 0 360 953 B1**
(45) Veröffentlichungstag und Bekanntmachung des Hinweises auf die Patenterteilung: **22.09.1993**
(21) Anmeldenummer: 89102184.2
(22) Anmeldetag: 09.02.1989
(51) Int. Cl.: B23F 19/00, B23F 19/06

(54) **Maschine zum Feinbearbeiten der Zahnflanken von verzahnten Werkstücken**
Machine for finishing the tooth flanks of toothed work pieces
Machine pour la finition de flancs de dents de pièces dentées

(30) Priorität: 28.09.1988 DE 8812273 U
(43) Veröffentlichungstag der Anmeldung: 04.04.1990
(73) Patentinhaber: HURTH MASCHINEN UND WERKZEUGE G.m.b.H., D-80809 München (DE)
(72) Erfinder: Huber, Manfred, D-8000 München 60 (DE)

(56) Entgegenhaltungen:
- DE-A- 3 142 843
- DE-A- 3 511 790
- DE-A- 3 704 607
- FR-A- 2 123 266
- FR-A- 2 299 935
- US-A- 2 762 268
- US-A- 2 873 652

## Beschreibung

Die Erfindung betrifft eine Maschine zum Feinbearbeiten der Zahnflanken von verzahnten Werkstücken mit einem zahnradartigen Werkzeug gemäß dem Oberbegriff des Hauptanspruchs.

### Stand der Technik

Eine Maschine der genannten Art ist von der DE 31 42 843 C2 bekannt. Diese Bauart ermöglicht es, beim Schaben, Rollen, Honen usw. jedem Punkt auf einer Flankenlinie des zu bearbeitenden Zahnrades einen bestimmten Achsabstand und einen bestimmten Schwenk- oder Eintauchwinkel zuzuordnen, die den Erfordernissen entsprechend einstellbar sind. Auf diese Weise ist es möglich, nahezu jede gewünschte Form der Flankenlinie zu erzeugen, und zwar unabhängig von der Form der Werkzeug-Zahnflanken. Auf der bekannten Maschine kann nach dem Parallelverfahren ebenso gearbeitet werden wie nach dem Diagonal- und Underpassverfahren oder auch im Tauchverfahren. Als nachteilig wird es bisweilen angesehen, daß die Bewegung des Zustellschlittens und die Schwenkbewegung der Wiege zwar unabhängig voneinander, aber in Abhängigkeit von der jeweiligen Stellung des Vorschubschlittens steuerbar sind. Die Möglichkeiten einer Korrekturbeeinflussung sind dadurch begrenzt. In der Praxis kommt es auch immer wieder vor, daß ein Übergang von einem Verfahren auf ein anderes während der Bearbeitung zweckmäßig wäre, sei es, um eine gewünschte Flankenform oder -korrektur zu erreichen oder um Bearbeitungsspuren zu "verwischen" oder aus anderen Gründen.

Eine solcher Übergang ist bei der bekannten Maschine nur bedingt möglich. Hinderlich sind insbesondere die erforderlich Verdrehung des Vorschubschlittens (beim Übergang z.B. vom Parallel- zum Diagonalverfahren) und die in der DE 34 10 686 C2 beschriebene Einrichtung, mit der der Vorschubschlitten in seiner jeweils eingestellten Winkellage relativ zum Maschinengestell bzw. zum Zustellschlitten gehalten wird.

### Aufgabe

Von daher liegt der Erfindung die Aufgabe zugrunde, die Maschine nach dem Oberbegriff des Hauptanspruchs so weiter zu entwickeln, daß ihr Einsatzbereich erweitert werden kann. Insbesondere soll jeder beliebige Übergang von einem Verfahren auf ein anderes möglich sein, ohne daß es dazu komplizierter Steuereinrichtungen bedarf. Auch soll die Möglichkeit einer Korrekturbeeinflussung gegeben sein.

### Lösung

Als Lösung wird eine Maschine vorgeschlagen, die die Merkmale des Anspruchs 1 aufweist. Dadurch, daß das Werkzeug jetzt mittels des Vorschubschlittens und des Querschlittens in zwei rechtwinkelig zueinander verlaufenden Richtungen relativ zum Werkstück verfahrbar ist, kann jeder innerhalb des Arbeitsbereiches vom Werkzeug anfahrbare Punkt in einfacher und zuverlässiger Weise als Kreuzungspunkt zweier Koordinaten definiert werden. Die bisher erforderliche Umrechnung von Winkelmaßen entfällt, da der Vorschubschlitten nicht mehr drehbar am Zustellschlitten angeordnet ist, sondern nur noch in einer Richtung verfahrbar ist. Dadurch sind alle Bewegungen frei programmierbar geworden, wodurch sowohl die Steuerung zum Anfahren aller erforderlichen Punkte auf der jeweils gewünschten Flankenlinie als auch die entsprechende Programmierung wesentlich vereinfacht werden und einem Übergang von einem Verfahren auf ein anderes während der Bearbeitung steht nichts im Wege.

Dank der Anordnung des Querschlittens kann, wie schon erwähnt, jeder Punkt innerhalb des Arbeitsbereichs der Maschine angefahren werden. Es ist also nicht mehr wie bisher erforderlich, das Werkstück genau mittig zur Drehachse des Werkzeugkopfes zu spannen, wodurch das umständliche Verschieben des Reitstockes auf dem Maschinenbett ebenso wie ein exaktes Abstimmen der Spannvorrichtungen weitgehend entfällt. Das Werkzeug kann jetzt zur Werkstückmitte gebracht werden und alle vorprogrammierten Arbeitsbewegungen gehen von diesem Punkt aus.
Dieser Vorteil erlaubt die Weiterbildung der Maschine mit dem Merkmal des Anspruchs 2. Werkstücke mit mehreren Verzahnungen lassen sich so in einer Aufspannung oder zumindest in weniger Aufspannungen als bisher bearbeiten, da jedes Werkzeug an die von ihm zu bearbeitende Verzahnung herangeführt werden kann, was bei der Maschine nach dem Stand der Technik nicht möglich ist.

Eine zweckmäßige Ausgestaltung der erfindungsgemäßen Maschine wird mit den Merkmalen des Anspruchs 3 aufgezeigt. Die von der DE 31 42 843 C2 bekannte Anordnung des Motors für den Drehantrieb des Werkzeugs seitlich am Werkzeugkopf kann wegen der ungleichen Gewichtsverteilung zu Unzulänglichkeiten im Bereich der Wiege bzw. ihres Verstellantriebes führen. Eine Anordnung des Motors vor oder hinter dem Werkzeug und achsparallel dazu bringt eine nahezu ideale Gewichtsverteilung. Diese Anordnung kann mitunter zu Problemen führen wegen eines ungenügenden Freigangs für das Werkstück: wird im Tauchverfahren gearbeitet, stört der Motor nicht; er kann aber im Wege sein, wenn - was bei dem angestrebten erweiterten Einsatzbereich ohne Einschränkungen möglich sein muß - nach dem Diagonal- oder nach dem Underpass-Verfahren gearbeitet wird. Auch das Zu- und Abführen der Werkstücke wird von einem vor oder hinter dem Werkzeug liegenden Motor u.U. erheblich beeinträchtigt. Eine Achsabstandsvergrößerung zwischen Werkzeug und Werkstück, nur um die Beschickung zu ermöglichen, ist zeitaufwendig und soll deshalb vermieden werden. Eine Ausgestaltung der Maschine mit dem Merkmal des Anspruchs 4 vermeidet diese Nachteile.

### Zeichnungen

Die Erfindung wird nachstehend anhand eines in sechs Figuren dargestellten Ausführungsbeispiels beschrieben.
Es zeigen
- Fig. 1: eine Ansicht der erfindungsgemäßen Maschine,
- Fig. 2: eine andere Ansicht der Maschine (in Pfeilrichtung II gemäß Fig. 1),
- Fig. 3: eine perspektivische Ansicht eines wesentlichen Teils der Maschine,
- Fig. 4: einen Ausschnitt aus Fig. 3 in einer geänderten Ausführung,
- Fig. 5: eine schematische Darstellung des Arbeitsbereichs und
- Fig. 6: eine ähnliche Darstellung wie Fig. 5 für eine mit zwei Werkzeugen ausgestattete Maschine.

### Beschreibung

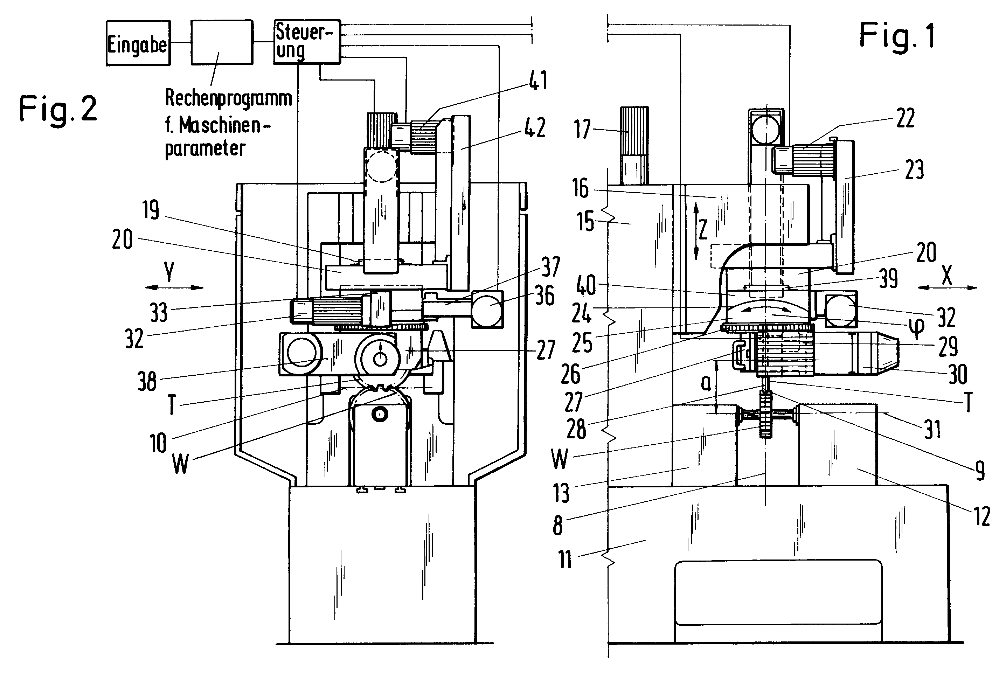

In den Figuren 1 bis 3 ist eine Zahnradschabmaschine gemäß der Erfindung in drei verschiedenen Ansichten gezeigt. Auf einem Bett 11 ist das zu schabende verzahnte Werkstück W zwischen Retistöcken 12, 13 drehbar aufgenommen. An einem Ständer 15 ist ein Zustellschlitten 16 senkrecht verschiebbar (Pfeilrichtung Z) und dafür mit einem Motor 17 und einem nicht gezeigten Spindeltrieb antreibbar. In einer Längsführung 19 ist ein Vorschubschlitten 20 parallel zur Werkstückachse 31 hin und her verfahrbar aufgenommen (Pfeilrichtung X), wofür ein Motor 22 mit einem Getriebe 23 vorgesehen ist.

In einer gegenüber der Längsführung 19 um 90° versetzten zweiten Längsführung 39 am Vorschubschlitten 20 ist ein Querschlitten 40 hin und her verfahrbar aufgenommen (Pfeilrichtung Y), wofür ein Motor 41 mit einem Getriebe 42 vorgesehen ist.
In einer Bogenführung 24 an der Unterseite des Querschlittens 40 ist eine Wiege 25 angeordnet, an der in einer Rundführung 26 ein Werkzeugkopf 27 um eine vertikale Achse 28 dreheinstellbar aufgenommen ist. Im Werkzeugkopf 27 ist ein zahnradartiges Werkzeug T gelagert, das von einem Motor 29 über ein Getriebe 38 antreibbar ist. Das Werkzeug T kann ein genutetes Schabrad, ein mit CBN- oder Diamantkörnern beschichtetes Hartschabrad, ein Honrad oder auch ein Rollrad sein. Die Drehachse 28 des Werkzeugkopfes 27 liegt zu Beginn eines jeden Bearbeitungsvorganges vorzugsweise (aber nicht zwingend) in der mittleren Rotationsebene 8 des Werkzeugs T.

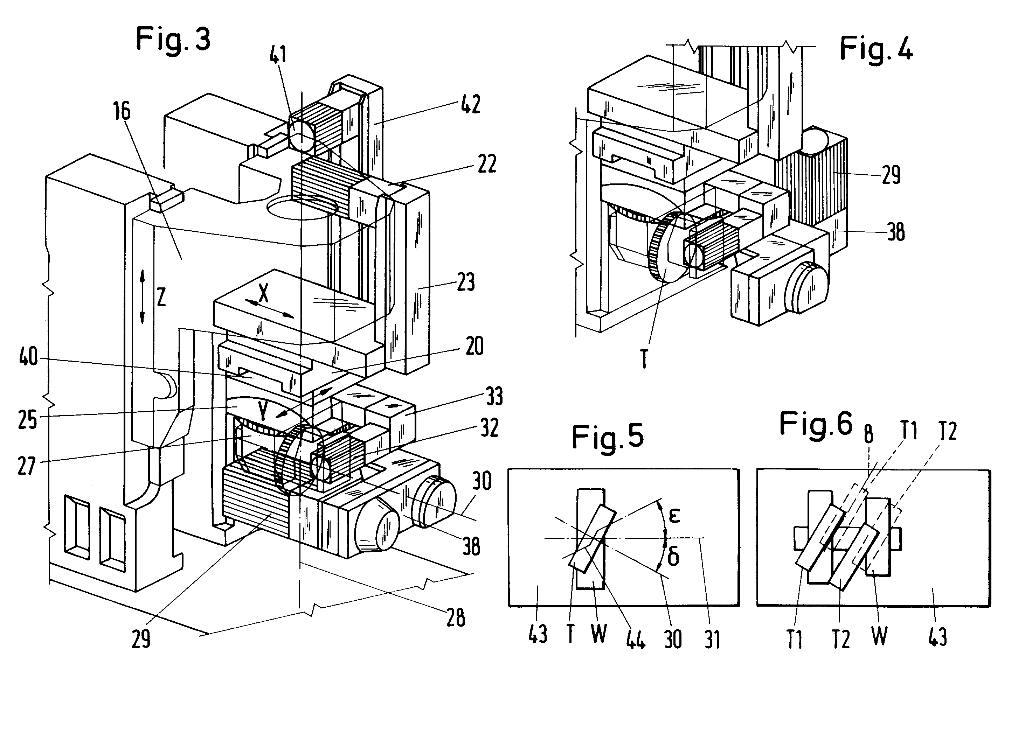

In der in Fig. 3 gezeigten Lage kann der Motor 29 bei manchen Arbeitsabläufen hinderlich sein. In Fig. 4 ist eine andere, stehende Anordnung des Motors 29 gezeigt, bei der der Zugang zum (hier nicht gezeigten) Werkstück unter dem Werkzeug T nicht behindert ist bzw. das Werkstück immer den erforderlichen Freigang behält.

Durch Verdrehen des Werkzeugkopfes 27 um die Achse 28, wofür ein Motor 36 mit einem Getriebe 37 vorgesehen ist, wird ein Achskreuzwinkel δ zwischen der Achse 30 des Werkzeugs T und der Werkstückachse 31 eingestellt. Die Achsen 30 und 31 liegen dabei in zueinander parallelen Ebenen. Durch entsprechende Abstimmung der Bewegung X des Vorschubschlittens 20 und der Bewegung Y des Querschlittens 40 wird die Vorschubrichtung des Werkzeugs T eingestellt, wenn nach dem Diagonalverfahren gearbeitet werden soll (die Vorschubrichtung leigt dann unter einem Vorschubwinkel ε geneigt zur Bildebene der Figuren 1 und 2). Wenn im Parallelverfahren gearbeitet werden soll, wird der Querschlitten 40 nicht bewegt, d.h. der Vorschub erfolgt nur in der Richtung X in der Bildebene der Figur 1. Wenn im Underpassverfahren gearbeitet werden soll, wird der Vorschubschlitten 20 nicht bewegt, d.h. der Vorschub erfolgt nur in der Richtung Y in der Bildebene der Figur 2. Falls im Tauchverfahren gearbeitet werden soll, werden weder der Vorschubschlitten 20 noch der Querschlitten 40 bewegt, sondern nur der Zustellschlitten 16, so daß nur eine Vorschubbewegung in der Richtung Z, d.h. im Sinne einer Veränderung des Achsabstandes a, erfolgt.

Die Wiege 25 mit dem Werkzeugkopf 27 und dem Werkzeug T sind in der Bogenführung 24 um eine Achse 10 schwenkbar. Für diese Schwenkbewegung φ ist ein Motor 32 mit einem Getriebe 33 vorgesehen. Um unerwünschte Verschneidungen an den Zähnen des Werkstücks W und damit zusammenhängende Beschädigungen an den Zähnen des Werkzeugs T zu vermeiden, ist es zweckmäßig, daß die mittlere Rotationsebene 8 des Werkzeugs T im jeweiligen Berührpunkt 9 immer senkrecht zur Flankenlinie steht. Die Achse 10 für die Schwenkbewegung φ verläuft deshalb durch den dem Werkstück W zugewendeten Scheitelpunkt der mittleren Rotationsebene 8.
Damit das Werkzeug T der gewünschten Form der Flankenlinie folgen kann, sind jedem Punkt der Flankenlinie außer einem durch die Kreuzung der Koordinaten in der X- und Y-Richtung definierten Kreuzungspunkt ein bestimmter Achsabstand a und ein bestimmter Schwenk- oder Eintauchwinkel φ zugeordnet. Die Bewegungen des Werkzeugs T werden am einfachsten anhand des von einem Punkt an seinem Außendurchmesser zu beschreibenden Weges festgelegt und der Maschinensteuerung, einer NC-Steuerung, über ein dei Maschinenparameter ermittelndes Rechenprogramm eingegeben. Die Abstimmung der Bewegungen X, Y, Z und φ sowie δ geschieht dann durch die NC-Steuerung.

Bei jedem auf dieser Maschine ausführbaren Bearbeitungsverfahren wie Schaben, Honen usw. stehen das Werkzeug T und das Werkstück W in einem Zweiflanken-Wälzeingriff. Abgesehen vom reinen Tauchverfahren führt das Werkzeug T immer zumindest eine hin- und hergehende Vorschubbewegung in einer durch die Koordinaten X und Y definierten Ebene aus. Wenn am Werkstück W ballige Zahnflanken erzeugt werden sollen, muß das Werkzeug T, damit der Zweiflanken-Wälzeingriff über die gesamte Zahnbreite erhalten bleibt bzw. um die gewünschte Flankenlinie auch erzeugen zu können, im Laufe der Vorschubbewegung eine Schwenkbewegung (Pfeilrichtung φ) ausführen, die mit einer Änderung des Achsabstandes a verbunden ist.

Wie schon erwähnt, können die verschiedenen Bewegungen unabhängig voneinander erfolgen, ihre gegenseitige Abhängigkeit wird nur durch eine entsprechende Programmierung der Steuerung bewirkt. Dadurch können praktisch beliebige Korrekturen in der Flankenlinie weitestgehend realisiert werden. Daneben ist es durch entsprechende Programmierung möglich, z.B. den Diagonalwinkel während eines Bearbeitungsablaufes zu ändern oder von einem Bearbeitungsverfahren (z.B. vom Diagonalschaben) auf ein anderes überzugehen (z.B. auf das Underpass-Verfahren). Dabei können solche Wechsel an einer frei wählbaren Stelle des Vorschubweges ebenso erfolgen wie ein kontinuierlicher Übergang möglich ist.

Mit der vorstehend beschriebenen Maschine können nach demselben Verfahren auch konische und konisch-ballige Zahnflanken erzeugt werden. In beiden Fällen ist dann eine gleichzeitige Bewegung des Werkzeugs T sowohl in der Z- als auch in der X- und/oder Y-Richtung notwendig. Für konisch-ballige Zahnflanken wird dieser zusammengesetzten Bewegung noch die Schwenkbewegung (Pfeilrichtung φ) überlagert.

In Fig. 5 ist schematisch der Arbeitsbereich 43 des Werkzeugs T dargestellt. Es ist ersichtlich, daß sich die Verzahnung eines Werkstücks W nicht immer an einer vorgegebenen Stelle befinden muß, sondern daß sie an jeder beliebigen Stelle vom Werkzeug T angefahren werden kann. Die Linie 44 zeigt beispielhaft, wie die Bewegung des Werkzeugs T in der X-Y-Ebene während der Bearbeitung des Werkstücks W geändert werden kann.

In Fig. 6 ist schematisch ein Werkstück W mit zwei Verzahnungen gezeigt, von denen die eine mit einem Werkzeug T1 (durchgehende Linien) bearbeitet wird, während ein zweites Werkzeug T2 funktionslos ist. Beide Werkzeuge T1, T2 sind im Werkzeugkopf 27 aufgenommen. Anschließend wird der Werkzeugkopf 27 so verfahren, daß die andere Verzahnung des Werkstücks mit dem Werkzeug T2 bearbeitet wird (unterbrochene Linien), während das erste Werkzeug T1 funktionslos ist. In solchen Fällen muß berücksichtigt werden, daß die Schwenkachse 10 nur durch die mittlere Rotationsebene 8 des Werkzeugs T1 verläuft, nicht aber durch die mittlere Rotationsebene des Werkzeugs T2. Bei einer ggf. erforderlichen Schwenkbewegung des Werkzeugs T2 muß die damit verbundene unerwünschte Zustellung durch entsprechendes Verändern des Achsabstandes a kompensiert werden.

Die Ausführung der erfindungsgemäßen Maschine ist nicht auf das vorhandene Beispiel beschränkt. Zwar bietet die ortsunveränderliche Anordnung des Werkstücks auf dem Maschinenbett bezüglich der Steifigkeit und der Beschickungsmöglichkeiten einen wesentlichen Vorteil gegenüber anderen bekannten Bauarten. Trotzdem können z.B. Werkzeug und Werkstück statt übereinander auch nebeneinander angeordnet sein mit horizontalen oder vertikalen Achsen. Ein anderer Vorteil der Maschinenkonzeption, nämlich daß die radialen Bearbeitungskräfte direkt von einer großflächigen Führung der Wiege aufgenommen werden können und nur die axialen Kräfte von den für die Dreheinstellung des Werkzeugkopfes notwendigen Bauteilen aufzunehmen sind, kann dabei beibehalten werden. Daneben sind die Antriebseinrichtungen für die verschiedenen Bewegungen nicht auf die beschriebenen und gezeichneten Ausführungen und Anordnungen beschränkt, was schon aus den allgemeinen Bezeichnungen "Motor" und "Getriebe" ersichtlich ist.

### Begriffsliste

- 1:
- 2:
- 3:
- 4:
- 5:
- 6:
- 7:
- 8: mittlere Rotationsebene von T
- 9: Berührpunkt
- 10: Achse von 24
- 11: Bett
- 12: Reitstock
- 13: Reitstock
- 14:
- 15: Ständer
- 16: Zustellschlitten
- 17: Motor für 16
- 18:
- 19: Längsführung
- 20: Vorschubschlitten
- 21:
- 22: Motor für 20
- 23: Getriebe
- 24: Bogenführung
- 25: Wiege
- 26: Rundführung
- 27: Werkzeugkopf
- 28: Achse von 26
- 29: Motor von T
- 30: Achse von T
- 31: Achse von W
- 32: Motor für φ
- 33: Getriebe
- 34:
- 35:
- 36: Motor für 26
- 37: Getriebe
- 38: Getriebe von T
- 39: Längsführung
- 40: Querschlitten
- 41: Motor für 40
- 42: Getriebe
- 43: Arbeitsbereich
- 44: Bewegungsablauf
- a: Achsabstand
- T, T1, T2: Werkzeug
- W: Werkstück
- X: Bewegung horizontal
- Y: Bewegung horizontal
- Z: Bewegung vertikal
- φ: Schwenkbewegung
- δ: Achskreuzwinkel
- ε: Vorschubwinkel

## Patentansprüche

1. Maschine zum Feinbearbeiten der Zahnflanken von verzahnten Werkstücken (W) mit einem zahnradartigen Werkzeug (T, T1, T2), z.B. Schabrad od. dgl., das mit einem Werkstück in einem Zweiflanken-Wälzeingriff steht, bei der
a) das Werkstück ortsfest, aber drehbar, auf dem Maschinenbett (11) gelagert ist,
b) das Werkzeug in einem Werkzeugkopf (27) aufgenommen ist, der um eine senkrecht zur Werkzeug- und zur Werkstückachse gerichtete Einstellachse (28) dreheinstellbar in einer Wiege (25) an einem in vertikaler Richtung verfahrbaren Zustellschlitten (16) angeordnet ist, wobei die Wiege in einer Bogenführung (24) um eine horizontale Achse (10) schwenkbar ist, und
c) zwischen der Wiege und dem Zustellschlitten ein parallel zur Werkstückachse verfahrbarer Vorschubschlitten (20) angeordnet ist,
dadurch gekennzeichnet, daß
d) unter dem Vorschubschlitten (20) ein an seiner Unterseite die Bogenführung (24) für die Weige (25) aufweisender, horizontal in einer um 90° zur Bewegungsrichtung (X) des Vorschubschlittens (20) versetzten Richtung (Y) verfahrbarer Querschlitten (40) angeordnet ist, und
e) Steuereinrichtungen vorhanden sind, mit denen die Bewegungen (X,Y,Z) des Vorschubschlittens (20), des Querschlittens (40) und des Zustellschlittens (16) sowie die Schwenkbewegung (φ) der Wiege (25) unabhängig voneinander steuerbar sind.

2. Maschine nach Anspruch 1, dadurch gekennzeichnet, daß im Werkzeugkopf (27) zwei oder mehr Werkzeuge (T1, T2) in Achsrichtung nebeneinander aufgenommen sind zur Bearbeitung von Werkstücken (W) mit zwei oder mehr Verzahnungen.

3. Maschine nach Anspruch 1 oder 2, bei der die Einrichtungen für den Drehantrieb (Motor 29, Getriebe 38) des Werkzeugs (T) am Werkzeugkopf (27) angeordnet sind, dadurch gekennzeichnet, daß der Motor (29) achsparallel zum Werkzeug (T) und radial neben diesem angeordnet ist.

4. Maschine nach Anspruch 1 oder 2, bei der die Einrichtungen für den Drehantrieb (Motor 29, Getriebe 38) des Werkzeugs (T) am Werkzeugkopf (27) angeordnet sind, dadurch gekennzeichnet, daß der Motor (29) stehend, d.h. mit vertikaler Achse angeordnet ist.

## Claims

1. A machine for precision machining of tooth profiles of toothed workpieces (W) with a gearwheel-like tool (T, T1, T2), e.g. a shaving wheel or the like, in tight-mesh with a workpiece, wherein:
a) the workpiece is mounted on the bench (11) in a stationary yet rotatable manner;
b) the tool is contained in a tool head (27), arranged so as to be rotatably adjustable - about an adjustment axis (28) orientated at right angles to the tool axis and to the workpiece axis - in a rocker (25) on a feed slide (16) displaceable in the vertical direction, the rocker being pivotable in a curved guide (24) about a horizontal axis (10); and
c) an advance slide (20), displaceable parallel to the workpiece axis, is arranged between the rocker and the feed slide;
**characterised in that:**
d) a transverse slide (40), having the curved guide (24) for the rocker (25) on its underside, and horizontally displaceable in a direction (Y) offset at 90° to the direction of movement (X) of the advance slide (20), is arranged beneath the advance slide (20); and
e) control devices are present, by means of which the movements (X, Y, Z) of the advance slide (20), the transverse slide (40) and the feed slide (16), and also the pivoting movement (φ) of the rocker (25), are controllable independently of one another.

2. A machine in accordance with claim 1, **characterised in that** two or more tools (T1, T2), next to one another in the axial direction, are contained in the tool head (27) for machining of workpieces (W) with two or more toothings.

3. A machine in accordance with claim 1 or 2, wherein the devices for rotational drive (motor 29, gears 38) of the tool (T) are arranged on the tool head (27), **characterised in that** the motor (29) is arranged axially parallel to the tool (T) and radially next to the same.

4. A machine in accordance with claim 1 or 2, wherein the devices for rotational drive (motor 29, gears 38) of the tool (T) are arranged on the tool head (27) **characterised in that** the motor (29) is arranged so as to be standing, i.e. with a vertical axis.

## Revendications

1. Machine pour la finition des flancs de dents de pièces d'oeuvre dentées (W) avec un outil en forme de roue dentée (T, T1, T2), par exemple une roue de rasage ou un outil analogue, qui est en prise de roulement sur deux flancs avec une pièce d'oeuvre, machine dans laquelle:
a) la pièce d'oeuvre est montée sur la banc de machine (11) à un endroit fixe, mais en étant susceptible de tourner,
b) l'outil est saisi dans une tête d'outil (27) qui, en étant susceptible d'être réglée en rotation autour d'un axe de réglage (28) perpendiculaire à l'axe de l'outil et à l'axe de la pièce d'oeuvre, est disposée dans un berceau (25) sur un chariot de positionnement (16) susceptible d'être déplacé en direction verticale, le berceau pouvant pivoter dans un guidage en arc (24), autour d'un axe horizontal (10),
c) entre le berceau et le chariot de positionnement est disposé un chariot d'avance (20) susceptible d'être déplacé parallèlement à l'axe de la pièce d'oeuvre, machine characterisée en ce que:
d) sous le chariot d'avance (20) est disposé un chariot transversal (40), comportant contre sa face inférieure le guidage en arc (24) pour le berceau (25), et susceptible de se déplacer horizontalement dans une direction (Y) décalée de 90° par rapport à la direction de déplacement (X) du chariot d'avance (20),
e) il est prévu des dispositifs de commande, grâce auxquels les déplacements (X,Y,Z) du chariot d'avance (20), du chariot transversal (40) et du chariot de positionnement (16), ainsi qe le mouvement de pivotement (φ) du berceau (25), sont susceptibles d'être commandés indépendamment les uns des autres.

2. Machine selon la revendication 1, caractérisée en ce que, dans la tête d'outil (27), deux ou plusieurs outils (T1, T2) sont saisis en direction axiale à côté les uns des autres, pour usiner des pièces d'oeuvre (W) avec deux ou plusieurs dentures.

3. Machine selon la revendication 1 ou la revendication 2, dans laquelle les dispositifs pour l'entraînement en rotation (moteur 29, transmission 38) de l'outil (T) sont disposés sur la tête d'outil (27), machine caractérisée en ce que le moteur (29) est disposé avec son axe parallèle à l'outil (T) et radialement à côté de celui-ci.

4. Machine selon la revendication 1 ou la revendication 2, dans laquelle les dispositifs pour l'entraînement en rotation (moteur 29, transmission 38) de l'outil (T) sont disposés sur la tête d'outil (27), machine charactérisée en ce que le moteur (29) est debout, c'est-à-dire que son axe est vertical.
